Europäisches Patentamt

European Patent Office

Office européen des brevets

(11) Veröffentlichungsnummer : **0 165 499**
**B1**

(12) **EUROPÄISCHE PATENTSCHRIFT**

(45) Veröffentlichungstag der Patentschrift :
07.09.88

(21) Anmeldenummer : 85106373.5

(22) Anmeldetag : 23.05.85

(51) Int. Cl.⁴ : **H 04 Q   3/68**

(54) **Raummultiplexkoppelnetz.**

(30) Priorität : 12.06.84 DE 3421760

(43) Veröffentlichungstag der Anmeldung :
27.12.85 Patentblatt 85/52

(45) Bekanntmachung des Hinweises auf die Patenterteilung : 07.09.88 Patentblatt 88/36

(84) Benannte Vertragsstaaten :
AT BE CH DE FR GB IT LI NL SE

(56) Entgegenhaltungen :
EP-A- 0 037 882
EP-A- 0 055 944
WO-A-84 /006 60
DE-A- 2 638 593
FR-A- 2 029 766
GB-A- 2 014 018
PATENTS ABSTRACTS OF JAPAN, Band 4, Nr. 67 (E-
11)(549), 20. Mai 1980, Seite 111 E 11; & JP - A - 55
37022 (KOKUSAI DENSHIN DENWA K.K.) 14.03.1980
COMMUTATION & ELECTRONIQUE, Heft 40, Januar
1973; Seiten 14-40, Issy-les-Moulinaux, FR; POSTOL-
LEC: "Le réseau de connexion du système E10"

(73) Patentinhaber : Siemens Aktiengesellschaft Berlin
und München
Wittelsbacherplatz 2
D-8000 München 2 (DE)

(72) Erfinder : Knorpp, Eberhard, Dipl.-Ing.
Zugspitzstrasse 26
D-8035 Gauting (DE)
Erfinder : Binz, Reiner, Dipl.-Ing.
Rosenstrasse 5
D-8021 Hohenschäftlarn (DE)

**Beschreibung**

Die Erfindung betrifft ein Raummultiplexkoppelnetz aus einer Mehrzahl gleicher Kopplerbaugruppen mit jeweils einer Mehrzahl von Eingangsanschlüssen und Erweiterungsanschlüssen sowie mit einer gegenüber der Anzahl der Eingangsanschlüsse ganzzahlig mehrfachen Anzahl von Ausgangsanschlüssen, die jeweils wahlweise mit jedem der Eingangsanschlüsse und jeweils mit einem bestimmten anderen der Erweiterungseingangsanschlüsse verbunden werden können.

Beim modularen Aufbau von Raummultiplexkoppelnetzen wird die Verwendung gleicher Kopplerbaugruppen in möglichst geringer Anzahl angestrebt.

Vom Aufwand her wäre es am günstigsten, ein ganzes Koppelfeld durch eine einzige große Baugruppe zu realisieren. Sowohl von der Technologie als auch von den Betriebsverhältnissen her kann jedoch ein bestimmter Wert der Anschlußzahlen nicht ohne weiteres überschritten werden, was insbesondere dann gilt, wenn solche Kopplerbaugruppen in integrierter Schaltkreistechnik aufgebaut werden sollen.

Im Hinblick auf die Anzahl benötigter Koppelbaugruppen sind ab einer bestimmten Koppelnetzgröße mehrstufige Anordnungen günstig. Die Beibehaltung der Einheitlichkeit der Baugruppen führt bei solchen mehrstufigen Anordnungen dann allerdings unter Umständen zu unnötigem Aufwand, da z. B. Empfängerschaltungen, die Eingangsverstärker umfassen, und die bei Kopplerbaugruppen der eingangsseitigen Koppelnetzstufe erforderlich sind, in den Kopplerbaugruppen der übrigen Koppelnetzstufen eigentlich überflüssig sind. Von da her gesehen müßte also von der Einheitlichkeit der Baugruppen abgegangen werden indem nur Kopplerbaugruppen verwendet werden, die keine Empfängerschaltungen umfassen und indem gesonderte Empfängerbaugruppen verwendet werden, die den Kopplerbaugruppen der eingangsseitigen Koppelnetzstufe vorgeschaltet sind.

Bei bekannten einstufigen Anordnungen (siehe z. B. Comutation & Electronique, Nr. 40, Januar 1973, S. 14 bis 40) besteht das Koppelfeld aus wenigstens zwei Koppelfeldteilen die jeweils so viele Koppelfeldeinheiten wie Koppelfeldteile umfassen und bei denen die an die Koppelfeldeinheiten angeschlossenen Zubringerleitungen auch mit jeweils einem Eingang einer Koppelfeldeinheit jedes anderen Koppelfeldteils in Verbindung stehen. Die einzelnen Koppelfeldeinheiten haben daher Baugruppen zu umfassen, die der Signalverteilung dienen. Außerdem führt bei einer derartigen Koppelfeldkonzeption eine Vervielfachung der Anschlußzahlen zu einer quadratischen Zunahme der Anzahl der verwendeten Koppelfeldeinheiten.

Die Aufgabe der vorliegenden Erfindung besteht darin, ein Raummultiplexkoppelnetz anzugeben, das auch die erwähnten Eigenschaften der Einheitlichkeit der zu seinem Aufbau verwendeten Kopplerbaugruppen und der möglichst geringen Anzahl solcher Kopplerbaugruppen erfüllt, darüber hinaus aber auch im Hinblick auf die Verdrahtung der einzelnen Kopplerbaugruppen besonders günstige Verhältnisse bietet.

Diese Aufgabe wird gelöst mit einem Raummultiplexkoppelnetz der eingangs genannten Art, das erfindungsgemäß dadurch gekennzeichnet ist, daß es aus wenigstens zwei jeweils gleichviele der Kopplerbaugruppen umfassenden Koppelnetzteilen besteht, daß die Eingänge jeder Kopplerbaugruppe eine der Anzahl der Koppelnetzteile gleiche Anzahl gleich großer Eingangsgruppen bilden, wobei die Eingänge der einen Eingangsgruppe über eingangsindividuelle zur Kopplerbaugruppe gehörende, mehrere Ausgänge aufweisende Eingangsverstärker mit Zubringerleitungen verbunden sind, die über das Koppelnetz mit Abnehmerleitungen zu verbinden sind, daß die Eingänge der übrigen Eingangsgruppen jeweils mit Ausgängen entsprechender zu anderen Kopplerbaugruppen gehörender Eingangsverstärker verbunden sind, und zwar von weiterer Eingangsgruppe zu weiterer Eingangsgruppe mit Ausgängen von Eingangsverstärkern, die einer Kopplerbaugruppe jeweils eines anderen Koppelnetzteils angehören, und daß die Ausgänge jeder Kopplerbaugruppe zu einem Teil mit Abnehmerleitungen und zu einem anderen Teil mit den Erweiterungseingängen einer von Kopplerbaugruppe zu Kopplerbaugruppe anderen Kopplerbaugruppe desselben Koppelnetzteils verbunden sind.

Es wird dabei von Kopplerbaugruppen Gebrauch gemacht, die für sich bekannt sind (siehe DE-PS-32 04 9 007) und die sich dadurch auszeichnen, daß sie außer den Eingängen für den Anschluß von Zubringerleitungen und den Ausgängen für den Anschluß von Abnehmerleitungen, die wahlweise von jedem der Eingänge aus erreicht werden können, auch sogenannte Erweiterungseingangsanschlüsse aufweisen, die jeweils nur mit einem bestimmten der Ausgänge verbindbar sind und mit deren Hilfe bei Verwendung mehrerer Kopplerbaugruppen eine entsprechende Vergrößerung der Eingangszahlen erzielbar ist.

Eine weitere Ausgestaltung der Erfindung betrifft die konstruktive Ausbildung der einzelnen Baugruppen, die zu einer besonders günstigen Rückwandverdrahtung führt.

Nachstehend wird die Erfindung anhand eines Ausführungsbeispiels unter Bezugnahme auf eine Zeichnung näher erläutert.

In der Zeichnung zeigen:

Fig. 1 ein erfindungsgemäßes Raummultiplexkoppelnetz für den Anschluß von 128 Zubringer- und 128 Abnehmerleitungen.

Fig. 2 eine der Kopplerbaugruppen, wie sie zum Aufbau des Koppelnetzes gem. Fig. 1 verwendet sind.

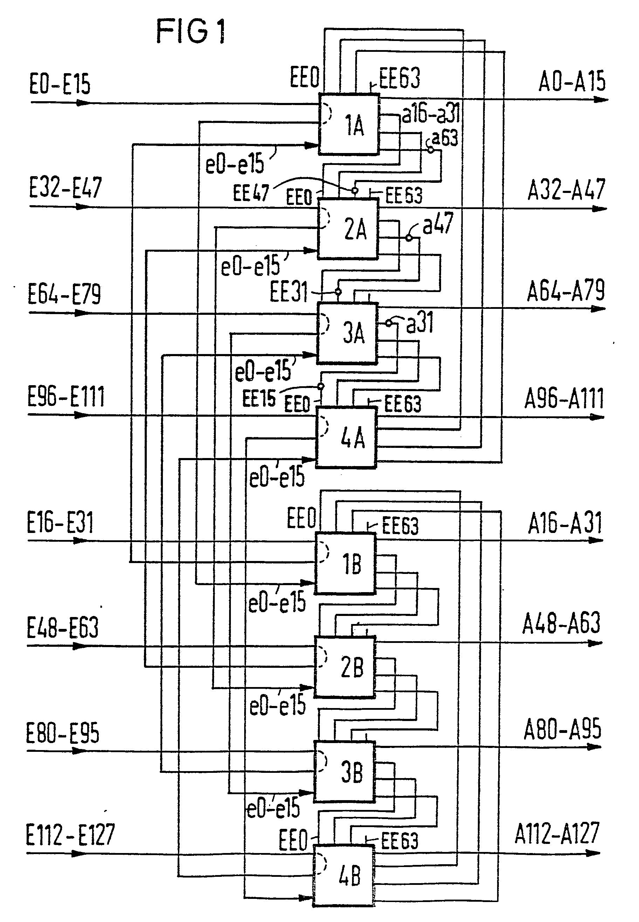

Das in Fig. 1 dargestellte, dem Anschluß von 128 Zubringerleitungen und 128 Abnehmerleitungen dienende Raummultiplexkoppelnetz besteht aus zwei Koppelfeldteilen, die jeweils vier Kopplerbaugruppen 1A bis 4A bzw. 1B bis 4B umfassen. Es wäre auch eine andere Unterteilung des Koppelnetzes möglich.

Jede der genannten Kopplerbaugruppen weist 32 Eingangsanschlüsse E bzw. e, 64 Ausgangsanschlüsse A bzw. a und 64 Erweiterungseingangsanschlüsse EE auf.

Jeweils 16 der Eingangsanschlüsse der Kopplerbaugruppen, nämlich die Eingangsanschlüsse E, sind für den direkten Anschluß von Zubringerleitungen vorgesehen.

Wie durch gestrichelte Schleifen innerhalb der die Kopplerbaugruppen symbolisierenden Blöcke und die diese Schleifen fortsetzenden Leitungen angedeutet, sind Zubringerleitungen, die an die Eingänge E einer Kopplerbaugruppe in der einen Koppelfeldhälfte angeschlossen werden, auch mit den Eingängen e einer entsprechenden Kopplerbaugruppe in der jeweils anderen Koppelfeldhälfte verbunden. So würde eine Zubringerleitung, die beispielsweise an den Eingang E0 der ersten Kopplerbaugruppe 1A angeschlossen ist, auch mit dem Eingang e0 der ersten Kopplergruppe 1B in der anderen Koppelnetzhälfte in Verbindung stehen. Umgekehrt ist eine Zubringerleitung, die an den Eingang E16 der letztgenannten Kopplerbaugruppe 1B angeschlossen ist, auch an den Eingang e0 der Kopplerbaugruppe 1A angeschlossen.

Von den erwähnten 64 Ausgangsanschlüssen der Kopplerbaugruppen dienen jeweils 16 Ausgänge A dem Anschluß von Abnehmerleitungen.

Die übrigen Ausgänge a der Kopplerbaugruppen stehen mit jeweils einem anderen Erweiterungseingang EE einer der übrigen Kopplerbaugruppen derselben Koppelnetzhälfte in Verbindung. So sind beispielsweise die Ausgänge a16 bis a63 der ersten Kopplerbaugruppe 1A mit den Erweiterungseingängen EE0 bis EE47 der Kopplerbaugruppe 2A derselben Koppelfeldhäfte verbunden. Gegebenenfalls vorhandene weitere Erweiterungseingänge, hier 16, der einzelnen Kopplerbaugruppen bleiben unbeschaltet bzw. sind auf Festpotential gelegt.

Die erwähnten Kopplerbaugruppeneingänge E und e können wahlweise mit jedem der Kopplergruppenausgänge A und a verbunden werden. Von einem Erweiterungseingang EE hingegen kann lediglich ein bestimmter der Ausgänge erreicht werden.

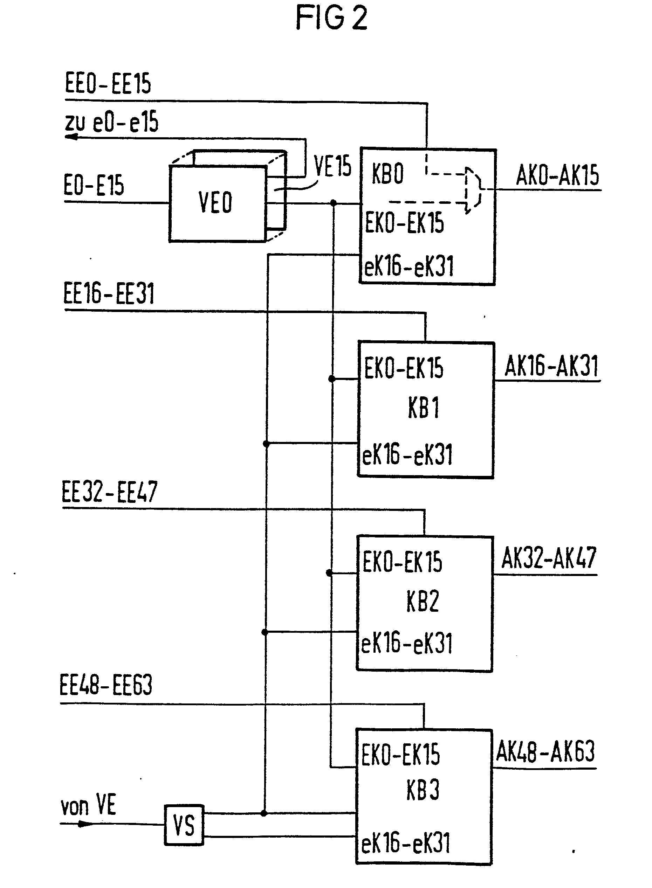

In der Fig. 2 ist eine der Kopplerbaugruppen des Koppelnetzes gem. Fig. 1 mehr ins einzelne gehend dargestellt. Jede Kopplerbaugruppe besteht demnach aus vier Koppelnetzbausteinen KB0 bis KB3, die jeweils Eingangsanschlüsse EK bzw. eK, 16 Ausgangsanschlüsse AK und 16 Erweiterungseingangsanschlüsse EEK aufweisen. Die Eingangsanschlüsse sind vielfach geschaltet, so daß, wie schon dargelegt, eine aus solchen Koppelnetzbausteinen gebildete Kopplerbaugruppe insgesamt für den Anschluß von 32 Zubringerleitungen und 64 Abnehmerleitungen ausgelegt ist und 64 Erweiterungseingangsanschlüsse aufweist. Ein Raummultiplexkoppelnetz für dieselben Anschlußzahlen, das dreistufig unter Verwendung von ebenfalls 32 Eingangsanschlüsse und 16 Ausgangsanschlüsse aufweisenden Koppelbausteine ohne Erweiterungsanschlüsse aufgebaut ist, erfordert 40 solcher Bausteine gegenüber 32 Koppelnetzbausteinen, die für das erfindungsgemäße Koppelnetz erforderlich sind.

Wie in der Fig. 2 ferner gezeigt ist gehören zu einer solchen Kopplerbaugruppe 16 Eingangsverstärker VE0 bis VE15. Die Eingänge dieser Verstärker bilden die im Zusammenhang mit der Erläuterung der Fig. 1 erwähnten Kopplerbaugruppeneingänge E, an die die Zubringerleitungen angeschlossen werden.

Jeder der Eingangsverstärker weist 2 Ausgänge auf. Einer der Ausgänge ist mit Eingängen EK der Koppelbausteine verbunden. Der andere Ausgang führt in Entsprechung der Darstellung in Fig. 1 zu einem Eingang e einer Kopplerbaugruppe der jeweils anderen Koppelnetzhälfte. Würde es sich bei der Kopplerbaugruppe gem. Fig. 2 um die Kopplerbaugruppe 1A gem. Fig. 1 handeln, dann wäre der erwähnte zweite Ausgang der Eingangsverstärker also mit den Eingängen e0 bis e15 der Kopplerbaugruppe 1B gem. Fig. 1 verbunden zu denken.

Entsprechend werden den Koppelbausteinen der in Fig. 2 dargestellten Kopplerbaugruppe über eine Verteilerschaltung VS Signale zugeführt, die Eingangsverstärker der Kopplerbaugruppe 1B gem. Fig. 1 zu durchlaufen haben. Sie gelangen von dieser Verteilerschaltung an die ebenfalls vielfach geschalteten Eingänge eK der Koppelbausteine, die den erwähnten Eingängen e in Fig. 1 entsprechen. Die den Eingängen der Koppelbausteine zugeführten Signale werden also im einen Fall von baugruppeneigenen Eingangsverstärkern verstärkt, im anderen Fall von Eingangsverstärkern, die einer Baugruppe der anderen Koppelfeldhälfte angehören.

Wenn bei dem Koppelnetz gem. Fig. 1 beispielsweise eine Verbindung der Zubringerleitung, die am Eingang E15 der Kopplerbaugruppe 1A angeschlossen ist, mit einer Abnehmerleitung erfolgen soll, die an den Ausgang A111 der Kopplerbaugruppe 4A angeschlossen ist, dann erfolgt dies über den folgenden Verbindungsweg :

Der Eingang E15 der Kopplerbaugruppe 1A wird zu deren Ausgang a63 durchgeschaltet. Von dort führt die Verbindung weiter über den Erweiterungseingang EE47 der Kopplerbaugruppe 2A, der permanent mit dem Ausgang a47 der Kopplerbaugruppe 2A verbunden ist, der seinerseits mit dem Erweiterungseingang EE31 der Kopplerbaugruppe 3A in Verbindung steht. Dieser Erweiterungseingang ist permanent auf den Ausgang a31 dieser Kopplerbaugruppe 3A durchgeschaltet, der an den Erweiterungseingang EE15 der Kopplerbaugruppe 4A angeschlossen ist. Auch die Verbindung dieses Erweiterungseingangs zu dem gewünschten Ausgang A111 ist permanent durchgeschaltet, so daß für die gesamte beschriebene Verbindung lediglich bei der Kopplerbaugruppe 1A die Durchschaltung vom Eingang E15 zum Ausgang a63 eingestellt werden muß.

Wie angedeutet, kann durch entsprechende Anordnung der Anschlußstifte für die Eingänge, Erweiterungseingänge und Ausgänge der Kopplerbaugruppen eine günstige Rückwandverdrahtung der Kopplerbaugruppen erreicht werden. Diese konstruktive Ausgestaltung besteht darin, daß die Anschlußstifte für mit Erweiterungseingängen einer anderen Kopplerbaugruppe zu verbindenden Ausgänge den Anschlußstiften für die Erweiterungseingänge gegenüberliegend angeordnet sind, was beispielsweise bei der Kopplerbaugruppe 1A bedeutet, daß deren Erweiterungseingänge EE in Abweichung von der Darstellung gem. Fig. 1 den Ausgängen a16 bis a63 gegenüber liegen. Die Anordnung ist ferner so, daß die Anschlußstifte für von der Kopplerbaugruppe wegführende Eingangsverstärkerausgänge den Anschlußstiften für von den Eingangsverstärkern anderer Kopplerbaugruppen beaufschlagte Eingänge gegenüberliegend herausgeführt sind. In Bezugnahme auf Fig. 2 bedeutet dies, daß in Abweichung von der dortigen Darstellung die zweiten Ausgänge der Eingangsverstärker VEO bis VE15 und die Eingänge ek der Koppelbausteine an gegenüberliegenden Seiten der Gesamtkopplerbaugruppe herausgeführt sind. Durch diese Anordnung läßt sich erreichen, daß die Signale in der Rückwandverdrahtung nur in einer Richtung verlaufen, so daß man mit der Hälfte der Signallagen auskommt. Zwischen allen Baugruppen besteht die Möglichkeit desselben maximalen Signaltransfers, der beispielsweise über Koaxialleitungen erfolgt.

**Patentansprüche**

1. Raummultiplexkoppelnetz aus einer Mehrzahl gleicher Kopplerbaugruppen mit jeweils einer Mehrzahl von Eingangsanschlüssen und Erweiterungsanschlüssen sowie mit einer gegenüber der Anzahl der Eingangsanschlüsse ganzzahlig mehrfachen Anzahl von Ausgangsanschlüssen, die jeweils wahlweise mit jedem der Eingangsanschlüsse und jeweils mit einem bestimmten anderen der Erweiterungseingangsanschlüsse verbunden werden können, dadurch gekennzeichnet, daß es aus wenigstens zwei jeweils gleich viele der Kopplerbaugruppen (1A bis 4A ; 1B bis 4B) umfassenden Koppelnetzteilen besteht, daß die Eingänge (E ; e) eine der Anzahl der Koppelnetzteile gleiche Anzahl gleich großer Eingangsgruppen bilden, wobei die Eingänge (E) der einen Eingangsgruppe über eingangsindividuelle zur Kopplerbaugruppe gehörende mehrere Ausgänge aufweisende Eingangsverstärker (VEO bis VE15) mit Zubringerleitungen verbunden sind, die über das Koppelnetz mit Abnehmerleitungen zu verbinden sind, daß die Eingänge (e) der übrigen Eingangsgruppen jeweils mit Ausgängen entsprechender zu anderen Kopplerbaugruppen gehörender Eingangsverstärker (VEO bis VE15) verbunden sind, und zwar von weiterer Eingangsgruppe zu weiterer Eingangsgruppe mit Ausgängen von Eingangsverstärkern, die einer Kopplerbaugruppe jeweils eines anderen Koppelnetzteils angehören, und daß die Ausgänge (A ; a) jeder Kopplerbaugruppe zu einem Teil (A) mit Abnehmerleitungen und zu einem anderen Teil (a) mit den Erweiterungseingängen (EE) einer von Kopplerbaugruppe zu Kopplerbaugruppe anderen Kopplerbaugruppe desselben Koppelnetzteils verbunden sind.

2. Raummultiplexkoppelnetz nach Anspruch 1, dadurch gekennzeichnet, daß bei den einzelnen Kopplerbaugruppen die Anschlußstifte für mit Erweiterungseingängen einer anderen Kopplerbaugruppe zu verbindende Ausgänge den Anschlußstiften für die Erweiterungseingänge gegenüberliegend und die Anschlußstifte für von der Kopplerbaugruppe wegführende Eingangsverstärkerausgänge den Anschlußstiften für von den Eingangsverstärekern anderer Kopplerbaugruppen beaufschlagte Eingänge gegenüberliegend herausgeführt sind.

**Claims**

1. A space division multiplex switching network comprising a plurality of identical coupler assemblies which each comprise a plurality of input terminals and extension terminals and a number of output terminals which is a whole-numbered multiple of the number of input terminals, where said output terminals can each be selectively connected to each of the input terminals and can each be connected to a specific different member of the extension input terminals, characterised in that it comprises at least two switching network sections which each comprise an equal number of the coupler assemblies (1A to 4A ; 1B to 4B), that the inputs (E ; e) form a number — equal to the number of switching network sections — of input groups of equal size, where the inputs (E) of the first input group are connected via input-individual input amplifiers (VEO to VE15) which are assigned to the coupler assembly and are provided with a plurality of outputs, to feeder lines which are to be connected via the switching network to server lines, that the inputs (e) of the other input groups are each connected to outputs of corresponding input amplifiers (VEO to VE15) which are assigned to other coupler assemblies, and indeed from further input group to further input group to outputs of input amplifiers which are assigned to a coupler assembly of another respective switching network section, and that the outputs (A ; a) of each coupler assembly are connected in part (A) to server lines and in part (a) to the extension inputs (EE) of a coupler assembly, which differs from coupler assembly to coupler assembly, of the same switching network section.

2. A space division multiplex switching network as claimed in claim 1, characterised in that in the individual coupler assemblies the terminal pins for outputs which are to be connected to extension inputs of another coupler assembly lead out opposite the terminal pins for the extension inputs, and the terminal pins for input amplifier ouptuts which lead away from the coupler assembly lead out opposite the terminal pins for inputs which are connected to the input amplifiers of other coupler assemblies.

## Revendications

1. Réseau de couplage à multiplexage spatial constitué par une multiplicité de modules formant coupleurs et comportant chacun une multiplicité de bornes d'entrée et de bornes d'extension, ainsi qu'un nombre, égal à un multiple entier du nombre des bornes d'entrée, de bornes de sortie, qui peuvent être reliées au choix respectivement avec chacune des bornes d'entrée et respectivement avec une autre borne déterminée faisant partie des bornes d'entrée d'extension, caractérisé par le fait que le réseau de couplage est constitué par au moins deux parties comprenant chacune des nombres identiques de modules formant coupleurs (1A à 4A ; 1B à 4B), que les entrées (E ; e) forment un nombre de groupes d'entrée de même taille, égal au nombre des parties du réseau de couplage, les entrées (E) d'un groupe d'entrées étant reliées, par l'intermédiaire d'amplificateurs d'entrée (VEO à VE15) comportant plusieurs sorties prévues individuellement pour chaque entrée et associées au module formant coupleur, à des lignes d'arrivée qui doivent être reliées par l'intermédiaire du réseau de couplage à des lignes de départ, que les entrées (e) des autres groupes d'entrées sont reliées respectivement à des sorties d'amplificateurs d'entrée correspondants (VEO à VE15) faisant partie d'autres modules formant coupleurs, c'est-à-dire, d'un autre groupe d'entrées à un autre groupe suivant d'entrées, à des sorties d'amplificateurs d'entrée, qui font partie d'un module formant coupleur d'une autre partie respective du réseau de couplage, et que les sorties (A ; a) de chaque module formant coupleur sont réunies, pour une partie (A) à des lignes de départ et, pour une autre partie (a), aux entrées d'extension (EE) d'un autre module formant coupleur de la même partie du réseau de couplage, et ce d'un de ces modules au suivant.

2. Réseau de couplage à multiplexage spatial suivant la revendication 1, caractérisé par le fait que dans les différents modules formant coupleurs, les broches de raccordement pour des sorties devant être réunies à des entrées d'extension d'un autre module formant coupleur, sont ressorties en vis-à-vis des broches de raccordement pour les entrées d'extension, et les broches de raccordement pour des entrées d'amplificateurs d'entrée, qui partent du module formant coupleur, sont ressorties en vis-à-vis des broches de raccordement pour des entrées chargées par les amplificateurs d'entrée d'autres modules formant coupleurs.

FIG 1

# FIG 2

EE0-EE15

zu e0-e15

E0-E15 → VE0 → VE15

KB0
EK0-EK15
eK16-eK31

AK0-AK15

EE16-EE31

EK0-EK15
KB1
eK16-eK31

AK16-AK31

EE32-EE47

EK0-EK15
KB2
eK16-eK31

AK32-AK47

EE48-EE63

EK0-EK15
KB3
eK16-eK31

AK48-AK63

von VE → VS